# EUROPEAN PATENT APPLICATION

(11) **EP 4 445 979 A1**
(43) Date of publication of application: **16.10.2024**
(21) Application number: 23167422.7
(22) Date of filing: 11.04.2023
(51) Int. Cl.: B01D 3/00, B01D 3/06, C08F 6/00

(54) **A MULTI-STAGE DEVOLATILIZATION APPARATUS COMPRISING AT LEAST ONE STATIC MIXER**

(71) Applicant: Sulzer Management AG, 8401 Winterthur (CH)
(72) Inventor: The designation of the inventor has not yet been filed
(74) Representative: Henkel & Partner mbB

(57) **Abstract**

The present invention relates to a devolatilization apparatus for devolatilizing a composition comprising a volatile component, such as for devolatilizing a solid or liquid polymer composition comprising unreacted monomer, solvent and/or byproduct, wherein the devolatilization apparatus comprises an inlet for the composition to be devolatilized and at least two vessels being arranged in series to each other, each of which comprising at least one distributor, an outlet line for devolatilized composition and an outlet for gas, wherein the distributor of the first, most upstream of the at least two vessels comprises at least one static mixer and/or is connected with at least one static mixer, wherein the inlet for the composition to be devolatilized is connected with the at least one static mixer.

## Description

The present invention relates to a multi-stage devolatilization apparatus for devolatilizing a composition comprising a volatile component, such as for devolatilizing a solid or liquid polymer composition comprising unreacted monomer and solvent, to a plant for preparing a polymer comprising such a multi-stage devolatilization apparatus as well as to a devolatilization method making use of such a multi-stage devolatilization apparatus.

Devolatilization or degassing, respectively, denotes the controlled removal of gases and of other volatile substances, such as solvents or moisture, from solids and liquids. Devolatilization is commonly used to remove volatile components, which are mostly components having a comparable low molecular weight, such as residual monomers, solvents, reaction by-products and water, from polymers. This is necessary, in order to achieve a required purity of the respective polymer before its use by removing harmful and/or toxic components, by removing components negatively affecting the further processing of the polymer, such as its formability to articles, by removing components worsening the properties of the polymer, by removing components leading to an unpleasant smell of the polymer and/or by removing components being undesired for other reasons. Furthermore, the removal of monomers and solvent from a polymer composition allows to recover and potentially recycle the monomers and solvent in the process so as to increase the yield of the process as well as to reduce the quantity of waste.

In order to achieve a devolatilization, the component to be evaporated needs to have a higher partial pressure or higher thermodynamic activity, respectively, than the polymer. Moreover, the component to be evaporated needs to be able to diffuse through the polymer composition to the phase boundary. In particular in case of viscous polymers or polymer melts - and typically polymers and polymer melts are comparable viscous - the slow diffusion rate may be a speed limiting factor. Therefore, in order to accelerate the devolatilization, the composition being subjected to the devolatilization is usually devolatilized at an elevated temperature and/or devolatilized at a subatmospheric pressure, because both measurements increase the thermodynamic activity of the volatile component(s) and an increase of the temperature moreover decreases the viscosity of the polymer, thus improving the diffusion of the volatile component(s) within the polymer. Typically, polymer devolatilization is done by preheating the composition to be devolatilized in a preheater to a very high temperature at controlled pressure, before the composition is fed into a multistage devolatilization apparatus so as to allow the volatile component(s) to evaporate and thus to separate from the polymer melt at reduced pressure. Often, the composition to be devolatilized contains 60% or more volatile component(s) based on the total composition to be devolatilized, i.e. to the sum of polymer melt and volatile component(s). Usually, such a multistage devolatilization apparatus comprises three subsequent devolatilization vessels allowing to subsequently reduce the content of the volatile component(s) in the polymer melt to a low ppm level. It is important that the volatile component(s) vaporize during the devolatilization into the gas phase, grow and form bubbles, wherein the bubbles are allowed to diffuse from polymer melt to the melt surface. A well-designed devolatilization method should be able to ensure that the above-mentioned separation process reaches equilibrium conditions.

Several types of devolatilization apparatuses are known, such as static and dynamic devolatilization apparatuses. While a dynamic devolatilization apparatus comprises moving parts, such as blades, in order to maintain a high interfacial concentration gradient and in order to maintain a high diffusion rate of the volatile component(s) within the polymer, a static devolatilization apparatus does not comprise moving parts, but comprises internals, such as one or more perforated trays, one or more structured packings and/or one or more random packings, so as to create a high specific surface of the composition to be devolatilized and to distribute the composition to be devolatilized over the whole cross-section of the devolatilization apparatus. However, dynamic devolatilization apparatuses are, on account of their moving parts, connected with drastic disadvantages, such as being costly, requiring during the operation a high amount of energy, requiring regular maintenance and having a comparable high leak rate.

Thus, static devolatilization apparatuses have in comparison to dynamic devolatilization apparatuses the advantages - due to the absence of moving parts - of less energy consumption, of less installation costs, of requiring less maintenance and of having a comparable low leak rate. Common types of static devolatilization apparatuses are flash devolatilization apparatuses and falling strand devolatilization apparatuses. Flash devolatilization apparatuses typically comprise a preheater, for example a heat exchanger, and a flash chamber. During the operation, the polymer composition to be devolatilized is firstly pumped to the heat exchanger, where it is heated up and optionally pressurized in order to decrease its viscosity, before it is then pumped from the heat exchanger into the top of the flash chamber, where the pressure is relieved and evaporation of the volatile component(s) occurs. Falling strand devolatilization apparatuses operate similarly to flash devolatilization apparatuses, but comprise one or more perforated trays in order to create a high specific surface of the composition to be devolatilized, in order to to distribute the composition to be devolatilized over the whole cross-section of the devolatilization apparatus, in order to form falling strands of the composition to be devolatilized, in order to promote the growth of bubbles of the volatile component(s) and in order to accelerate the diffusion process.

In order to be flexible concerning the kind of composition, such as polymer, to be devolatilized, a devolatilization apparatus shall be desirably suitable to be used for the devolatilization of a wide range of compositions and in particular for the devolatilization of compositions having a comparably high viscosity as well as for the devolatilization of compositions having a comparably low viscosity. Such a flexibility is required, because in industrial polymerization plants different product grades are produced in different subsequent batches, such as a polymer with varying molecular weight and/or with different polymer structures, such as linear, branched or cross-linked structure, and thus with varying viscosity in different subsequent production charges. Thus, the devolatilization apparatus included in this polymerization plant should be able to process any of the produced batches, independently from the viscosity of the polymer melt, and should be able to provide the optimal residence time for devolatilizing the polymer melt to the desired degree. However, in order to prevent that the internals of the devolatilization apparatus block during the devolatilization of a composition having a high viscosity, for instance by clogging of openings of the internals by the high viscosity composition to be devolatilized, devolatilization apparatuses are usually designed for high viscosity compositions only. As a consequence thereof, usual devolatilization apparatuses are not at all optimized for devolatilizing compositions having a low viscosity, but they only insufficiently devolatilize low viscosity compositions. Alternatively, a devolatilization apparatuses may be designed for devolatilizing low viscosity compositions only. However, in this case the devolatilization apparatuses cannot be used for devolatilizing high viscosity compositions.

Another drawback of typical devolatilization apparatuses comprising a preheater is that they are usually not suitable to be used for compositions to be devolatilized containing one or more volatile compounds with low critical temperature and low boiling point at operating pressure, such as for example 1-butene. In order to avoid the formation of heterogenous flow during the devolatilization, in such a case the composition to be devolatilized has to be fed directly into the first devolatilization vessel without preheating. Furthermore, the first devolatilization vessel needs a recirculation line in order to recirculate a loop stream of the polymer melt so as to reach the required operating temperature of the devolatilization vessel. Thus, the first devolatilization vessel needs to have two separated inlet nozzles and the temperatures and compositions of the two streams being processed therein are significantly different, which leads to a separate volatile vaporization at different conditions and to an inhomogeneous mixture being collected at bottom of the devolatilization vessel. On account thereof, the devolatilization may not reach equilibrium conditions due to the mass and the temperature inhomogeneity.

In view of this, the object underlying the present invention is to provide a devolatilization apparatus for devolatilizing a composition comprising a volatile component, such as for devolatilizing a solid or liquid polymer composition comprising unreacted monomer, solvent and/or by-product, which allows to efficiently and with low operational costs devolatilize in a compact design not only high viscosity compositions, such as those having a dynamic viscosity of at least 1,000 Pa·s, but also low viscosity compositions, such as those having a dynamic viscosity of less than 1,000 Pa·s and in particular of less than 100 Pa s, so that the devolatilization apparatus is scalable and may be used to devolatilize polymer melts, such as polycaprolactone polymer melts, for various grades of polymers, and which allows to efficiently and with low operational costs devolatilize a composition containing one or more volatile compounds with low critical temperature and low boiling point at operating pressure, such as for example 1-butene.

In accordance with the present invention, this object is satisfied by providing a devolatilization apparatus for devolatilizing a composition comprising a volatile component, such as for devolatilizing a solid or liquid polymer composition comprising unreacted monomer, solvent and/or by-product, wherein the devolatilization apparatus comprises an inlet for the composition to be devolatilized and at least two vessels being arranged in series to each other, each of which comprising at least one distributor, an outlet line for devolatilized composition and an outlet for gas, wherein the distributor of the first, most upstream of the at least two vessels comprises at least one static mixer and/or is connected with at least one static mixer, wherein the inlet for the composition to be devolatilized of the devolatilization apparatus is connected with the at least one static mixer.

By providing a static mixer within the distributor or connecting a static mixer with the distributor of the first, most upstream of the at least two vessels and by connecting the inlet for the composition to be devolatilized of the devolatilization apparatus with the static mixer, the first vessel does not need two different inlets or nozzles, respectively, namely one for the composition to be devolatilized and one for the recirculated portion of the liquid composition, and thus during the operation of the first vessel not two different fluid streams are processed. On the contrary, on account of the static mixer the first vessel of the devolatilization apparatus according to the present invention only comprises one inlet for both, the composition to be devolatilized as well as the recirculated portion of the liquid composition being withdrawn from the outlet line for devolatilized composition. Furthermore, the mixing achieved in the static mixer enhances the formation of bubble nucleis of the volatile component(s) and leads to a homogenization of the two liquid streams, namely the composition to be devolatilized and the recirculated portion of the liquid composition being withdrawn from the outlet line for devolatilized composition, before the mixture is entered via the distributor into the first vessel. Thereby, the separation of the volatile component(s) from the liquid phase is enhanced. In addition, this allows to process compositions including volatile component(s) with a low critical temperature, since thereby suitable operating pressure and operating temperature may be adjusted. All in all, the devolatilization apparatus in accordance with the present invention allows to devolatilize a composition comprising a volatile component, such as a solid or liquid polymer composition comprising unreacted monomer, solvent and/or by-product, efficiently and with low operational costs in an apparatus with a compact design, which is not only useable for devolatilizing high viscosity compositions, such as those having a dynamic viscosity of at least 1,000 Pa s, but also useable for devolatilizing low viscosity compositions, such as those having a dynamic viscosity of less than 1,000 Pa·s and in particular of less than 100 Pa·s, and in particular also useable for devolatilizing a composition containing one or more volatile compounds with low critical temperature, such as for example 1-butene.

In accordance with the present invention, a distributor of the first, most upstream of the at least two vessels comprises at least one static mixer and/or is connected with at least one static mixer. Thus, the at least one static mixer may be arranged within the distributor or may connected with the distributor. Preferably, the at least one static mixer is connected with the distributor. Even more preferably, the at least one static mixer is directly connected with the upstream end of the distributor, i.e. arranged directly at the upstream end of the distributor, or the at least one static mixer is connected via a line with the upstream end of the distributor. The upstream end of the distributor is preferably the inlet of the distributor. If the at least one static mixer is connected via a line with the upstream end or inlet of the distributor, respectively, it is preferred that the distance between the outlet of the at least one static mixer and the inlet of the distributor is not more than 10 cm, more preferably not more than 5 cm and still more preferably not more than 0.5 cm. If the at least one static mixer is directly connected with the upstream end of the distributor, the outlet of the static mixer contacts the inlet of the distributor, or, in other words, in this embodiment the at least one distributor of the first, most upstream of the at least two vessels comprises at its upstream end an inlet and at its downstream end an outlet, wherein the at least one static mixer is arranged with its outlet directly upstream of the inlet of the distributor.

Alternatively, the distributor of the first, most upstream of the at least two vessels comprises at least one static mixer. In this embodiment, it is preferred that the at least one distributor of the first, most upstream of the at least two vessels comprises at its upstream end an inlet and at its downstream end an outlet, wherein the at least one static mixer is arranged downstream of the inlet, but upstream of the outlet of the distributor. For instance, a static mixer may be arranged within the distributor at a location so that the distance between the inlet of the distributor and the most upstream end of the static mixer is less than 20%, preferably less than 10%, more preferably less than 5% and most preferably less than 1% of the length of the distributor. Thus, it is preferred in this embodiment that a static mixer is arranged at a location so that the distance between the inlet of the distributor and the most upstream end (i.e. inlet) of the static mixer is not more than 10 cm, preferably not more than 5 cm and more preferably not more than 1 cm. Yet more preferably, a static mixer is arranged directly downstream of the inlet of the distributor, i.e. the at least one distributor of the first, most upstream of the at least two vessels comprises at its upstream end an inlet and at its downstream end an outlet, wherein the at least one static mixer is arranged directly downstream of the inlet of the distributor, i.e. the inlet of the static mixer contacts the inlet of the distributor.

In a further development of the idea of the present invention, it is suggested that the outlet line for devolatilized composition of the first, most upstream of the at least two vessels of the devolatilization apparatus is connected with a recirculation line leading into the at least one static mixer, with which the inlet for the composition to be devolatilized of the devolatilization apparatus is connected. Thereby, the composition to be devolatilized as well as the recirculated portion of the liquid composition being withdrawn from the outlet line for devolatilized composition are mixed together in the same static mixer, which enhances the formation of bubble nucleis of the volatile component(s) and leads to a homogenization of the two liquid streams, namely the composition to be devolatilized and the recirculated portion of the liquid composition being withdrawn from the outlet line for devolatilized composition, before the mixture is entered via the distributor into the first vessel. Thereby, the separation of the volatile component(s) from the liquid phase is enhanced. In addition, this allows to process compositions including volatile component(s) with a low critical temperature, since thereby suitable operating pressure and operating temperature may be adjusted.

Good results are in particular achieved, when a preheater is arranged in the recirculation line upstream of the at least one static mixer. This allows to control the operational temperature within the vessel easily by adjusting an appropriate preheater temperature and/or by adjusting an appropriate flowrate of the recycled liquid.

It is also possible to arrange a back pressure valve into the recirculation line upstream of the at least one static mixer.

More preferably, the recirculation line comprises a preheater as well as a back pressure valve, wherein the back pressure valve is arranged downstream of the preheater, but upstream of the at least one static mixer.

In accordance with the present invention, the at least two vessels are arranged in series to each other. Thus, the outlet line of each upstream vessel is connected with the inlet of the next downstream vessel. Consequently, it is preferred that the outlet line for devolatilized composition of the first, most upstream of the at least two vessels is connected with a connection line leading into the inlet of the second, next downstream of the at least two vessels. If the first, most upstream of the at least two vessels comprises also the aforementioned preferred recirculation line, the outlet line for devolatilized composition of the first, most upstream of the at least two vessels may split into the recirculation line and into the connection line. Alternatively, the first, most upstream of the at least two vessels may comprise two outlet lines for devolatilized composition, one of which being connected with the recirculation line and another of which being connected with the connection line.

In accordance with a further particularly preferred embodiment of the present invention, the outlet line for devolatilized composition of the second, next downstream vessel of the at least two vessels is connected with a recirculation line, which leads into and combines the connection line to a combined connection and recirculation line, which may also be denoted as inlet line of the second vessel.

It is further preferred that the connection line leading from the outlet for devolatilized composition of the first vessel to the inlet of the second vessel comprises a preheater. This allows to control the operational temperature within the second vessel easily by adjusting an appropriate preheater temperature and/or by adjusting an appropriate flowrate of the recycled liquid. Preferably, the preheater is located in the connection line downstream of the location at which the optional, but preferred recirculation line leads into the connection line.

In a further development of the idea of the present invention, it is proposed that the connection line leading from the outlet for devolatilized composition of the first vessel to the inlet of the second vessel comprises a static mixer and/or a back pressure valve. Good results are in particular obtained, when the connection line comprises a static mixer and a preheater, wherein the static mixer is arranged upstream of the preheater, but downstream of the location at which the optional, but preferred recirculation line leads into the connection line. In addition, the connection line may comprise a back pressure valve and/or a (further) static mixer being arranged within the distributor or being connected with the inlet of the distributor of the second vessel. Most preferably, the connection line comprises, downstream of the location at which the optional, but preferred recirculation line leads into the connection line, in this - order seen in downstream direction - a static mixer, a preheater and a (further) static mixer being arranged within the distributor or being connected with the inlet of the distributor of the second vessel. In the last embodiment, preferably no back pressure valve is arranged in the connection line.

As in the case of the first vessel, the (further) static mixer in the connection line leading into the second vessel is preferably connected with the distributor of the second vessel. Even more preferably, the (further) static mixer is directly connected with the upstream end of the distributor, i.e. arranged directly at the upstream end of the distributor or is connected via a line with the upstream end of the distributor. The upstream end of the distributor of the second vessel is preferably the inlet of the distributor. If the (further) static mixer is connected via a line with the upstream end or inlet of the distributor, respectively, it is preferred that the distance between the outlet of the (further) static mixer and the inlet of the distributor of the second vessel is not more than 10 cm, more preferably not more than 5 cm and still more preferably not more than 0.5 cm. If the (further) static mixer is directly connected with the upstream end of the distributor of the second vessel, the outlet of the static mixer contacts the inlet of the distributor. Even if the connection line may comprise in this embodiment a back pressure valve, it is preferred that the connection line does not comprise a pressure valve.

In a further development of the idea of the present invention, it is suggested that the devolatilization apparatus in accordance with the present invention comprises at least one further vessel, such as one to five further vessels being arranged in series with each other downstream of the second vessel, each of which comprising at least one distributor, an outlet line for devolatilized composition and an outlet for gas. More preferably, the devolatilization apparatus comprises exactly one further third, most downstream vessel, which comprises at least one distributor, an outlet line for devolatilized composition and an outlet for gas, wherein the outlet line for devolatilized composition of the second vessel is connected with a connection line leading into the inlet of the third vessel.

Preferably, the connection line leading into the inlet of the third vessel comprises i) a preheater and/or ii) a back pressure valve and/or a static mixer. Good results are in particular obtained, when the connection line comprises a preheater and a static mixer, wherein the static mixer is arranged downstream of the preheater, but upstream of the inlet of the distributor of the third vessel. A recirculation line is not preferred for the third vessel. Furthermore, it is preferred that no back pressure valve is arranged in the connection line leading to the inlet of the third vessel.

As in the case of the first and second vessels, the static mixer in the connection line leading into the third vessel is preferably connected with the distributor of the second vessel. Even more preferably, the static mixer is directly connected with the upstream end of the distributor, i.e. arranged directly at the upstream end of the distributor or is connected via a line with the upstream end of the distributor. The upstream end of the distributor of the third vessel is preferably the inlet of the distributor. If the static mixer is connected via a line with the upstream end or inlet of the distributor, respectively, it is preferred that the distance between the outlet of the static mixer and the inlet of the distributor of the second vessel is not more than 10 cm, more preferably not more than 5 cm and still more preferably not more than 1 cm. If the static mixer is directly connected with the upstream end of the distributor of the second vessel, the outlet of the static mixer contacts the inlet of the distributor. Even if the connection line may comprise in this embodiment a back pressure valve, it is preferred that the connection line does not comprise a pressure valve.

Regarding the kind of static mixer, the present invention is not particularly limited. Static mixer means any mixer, which does not comprise any moving part and does in particular not comprise any rotating part and any such mixer may be used in the present invention. Static mixers usually produce a mixing effect by generating a turbulent flow due to static, i.e. non-moving elements, such as plates, bars, crossbars, baffles, helically formed deflection means, grids and the like. Suitable examples for static mixers, are x-type static mixers, spiral/helical-type static mixers, quattro-type static mixers, baffle plate-type static mixers, turbulator strips-type static mixers and any combination of two or more of the abovementioned mixer types. X-type static mixers comprise deflection means in the form of bars, crossbars, plates or the like having in a plan view and/or side view and/or cross-sectional view a x-like form. Such x-type static mixers are described for instance in WO 2010/066457 A1, EP 1 206 962 A1, EP 2 158 027 B1 and EP 0 655 275 B1 and are commercially available from Sulzer Chemtech Ltd, Winterthur, Switzerland under the tradenames SMX, SMXL and SMX plus as well as from Fluitec, Neftenbach, Switzerland under the tradename CSE-X. Spiral/helical-type static mixers have a helically formed deflection means and are described for instance in US 3,743,250 A, whereas quattro-type static mixers comprise deflection means forming chamber-like mixing sections and are described for instance in EP 2 548 634 B1 and in EP 0 815 929 B1. While baffle plate-type static mixers comprise usually longitudinal deflection means and are described for instance in EP 1 510 247 B1 and in US 4,093,188 A, turbulator strip-type static mixers comprise in a tube a plurality of elongated strips, each of which being formed by a series of alternating deflection panels successively joined together by for example substantially triangular bridging portions with the strips being held together and anchored substantially on the axis of the tube by alternate ones of the bridging portions and the other bridging sections being disposed adjacent the inner wall of the tube and are described for instance in US 4,296,779 A. Other suitable static mixers are distributed from Sulzer Chemtech AG under the tradenames CompaX, SMI, KVM, SMV and GVM and from Stamixco AG, Wollerau, Switzerland under the tradename GVM. In view of the above, it is preferred that at least one and more preferred that all of the at least one static mixer of the at least two distributors is selected from the group consisting of x-type static mixers, spiral/helical-type static mixers, quattro-type static mixers, baffle plate-type static mixers, turbulator strips-type static mixers and any combination of two or more of the above mentioned mixer types.

Each of the vessels of the devolatilization apparatus comprises at least one distributor. Good results are in particular obtained, when each of the vessels comprises (exactly) one distributor.

In a further development of the idea of the present invention, it is suggested that each of the at least one distributor of each of the at least two vessels is a pipe or comprises an upstream portion being a pipe. The pipe or the portion being embodied as pipe may have any kind of cross-sectional form, such as a circular, square, rectangular, oval, elliptic or polygonal cross-sectional form. Preferably, the pipe or the portion being embodied as pipe has a circular cross-section. Most preferably, each of the at least two distributors is a pipe with a slanted downstream end.

Preferably, each of the at least two distributors is arranged at least substantially horizontal in the vessel and extends from one end of the vessel over 20 to 98%, preferably 30 to 95% and more preferably 40 to 90% of the width of the vessel. At least substantially horizontal means that the angle between the longitudinal direction of the distributor and the horizontal plane is less than 20°, preferably less than 10°, more preferably less than 5°, still more preferably less than 1° and most preferably 0°.

In order to create a high specific surface of the composition to be devolatilized and to distribute the composition to be devolatilized over the whole cross-section of the devolatilization apparatus, it is further preferred that in each of the at least two vessels below each of the distributors at least one internal being is arranged. Good results are in particular obtained, when the at least one internal is selected from the group consisting of perforated trays, structured packing elements, random packing elements and arbitrary combinations of two or more of the above mentioned internals.

In accordance with a particular preferred embodiment of the present invention, in each of the at least two vessels below each of the distributors one to twenty, preferably one to ten, more preferably one to five and most preferably one, two or three perforated trays are arranged. Each perforated tray may comprise a plurality of openings, wherein each of the openings of a tray has at least substantially the same cross-sectional area. At least substantially the same cross-sectional area means in this connection that each opening has a cross-sectional area which is 70 to 130%, preferably 80 to 120%, more preferably 90 to 110%, still more preferably 95 to 105% and most preferably the same as the average cross-sectional area of the openings of the respective tray. Furthermore, it is preferred that each perforated tray comprises a plurality of openings, wherein the average cross-sectional area of the openings of a tray being arranged in a vessel may be the same or different to the average cross-sectional area of the openings of a perforated tray being arranged in another vessel.

In accordance with an alternative particular preferred embodiment of the present invention, in each of the at least two vessels below each of the distributors one to twenty, preferably one to ten, more preferably one to five and most preferably one, two or three beds of structured packing elements are arranged. Preferably, each of the structured packing elements is a so-called cross-channel corrugated sheet packing, which is assembled from a plurality of corrugated sheets, which are arranged parallel and in touching contact with each other. Preferably, the corrugated metal sheets are fixed with each other by means of several rods penetrating the corrugated sheets perpendicular to the longitudinal section of the corrugated sheets, wherein the rods are fixed with the first and last corrugated sheet by means of a washer and a nut or by bending the rod. Each corrugated sheet preferably comprises a plurality of alternately oriented peaks and valleys, wherein adjacent corrugated sheets are oriented such that the corrugations of the adjacent corrugated sheets intersect in crisscross fashion with the corrugations of the corrugated sheets extending obliquely relative to the vertical or longitudinal direction, thus forming inclined channels which continuously cross one another. These channels positively influence the flows of the gas phase and of the liquid phase within the packing and facilitate the mass transfer between the phases. That is, the gas phase and the liquid phase are brought into contact in the channels of the structured packing element and the mass transfer as well as the heat transfer between the phases is thus facilitated.

In accordance with still an alternative particular preferred embodiment of the present invention, in each of the at least two vessels below each of the distributors one to twenty, preferably one to ten, more preferably one to five and most preferably one, two or three beds of random packing elements are arranged.

In accordance with a further aspect, the present invention relates to a plant for preparing a polymer comprising at least one polymerization reactor and connected with the outlet of at least one of the at least one polymerization reactor at least one above described devolatilization apparatus.

In accordance with still a further aspect, the present invention relates to a method for devolatilizing a composition, such as for devolatilizing a solid or liquid polymer composition comprising unreacted monomer, solvent and/or by-product, comprising a volatile component comprising the steps of feeding the composition to be devolatilized into the inlet for the composition to be devolatilized of the aforementioned devolatilization apparatus, of withdrawing gas from the outlets for gas of each of the at least two vessels and of withdrawing devolatilized composition from the outlet lines for devolatilized composition of each of the at least two vessels.

Good results are in particular obtained, when the devolatilization apparatus comprises three vessels, wherein the first and second vessel each comprises a recirculation line leading from the outlet line for devolatilized composition back into the respective vessel.

The recirculation ratios of the first and second vessel depend on the viscosity of the composition to be devolatilized and on whether the composition to be devolatilized contains one or more volatile compounds with a low critical temperature and low boiling point at operating pressure, such as 1-butene, or not. A low critical temperature and a low boiling point at operating pressure means in accordance with the present invention a critical temperature and low boiling point at operating pressure of less than 300°C and preferably of less than 230°C. If a compound with low critical temperature and low boiling point at operating pressure is contained, then a comparable high recirculation ratio is preferred.

Thus, the ratio of the liquid being withdrawn from the outlet line for devolatilized composition of the first vessel and being recirculated via the recirculation line back into the first vessel based on the total volume of liquid being withdrawn from the outlet line for devolatilized composition from the first vessel may be 0 to 80%. Good results are in particular obtained, when the ratio is at least 0.25 to 85% and more preferably 50 to 80%.

Likewise thereto, the ratio of the liquid being withdrawn from the outlet line for devolatilized composition of the second vessel and being recirculated via the recirculation line back into the second vessel based on the total volume of liquid being withdrawn from the outlet line for devolatilized composition from the second vessel may be 0 to 80%. Good results are in particular obtained, when the ratio is at least 0.25 to 85% and more preferably 50 to 80%.

The present invention is not particularly limited concerning the kind of composition to be devolatilized. For instance, the method is particularly suitable when the composition to be devolatilized is selected from the group consisting of polycaprolactones, polyolefin elastomers, polylactic acids, polyglycolic acids, polyolefins and mixtures or copolymers of two or more of the above mentioned polymers. Subsequently, the present patent application is described by way of example with reference to advantageous embodiments and to the enclosed drawings.

There is shown:
- Fig. 1: shows a schematic sectional view of a devolatilization apparatus according to one embodiment of the present invention.
- Fig. 2a to e: show four different types of static mixers being useable in the devolatilization apparatus and in the method in accordance with the present invention.

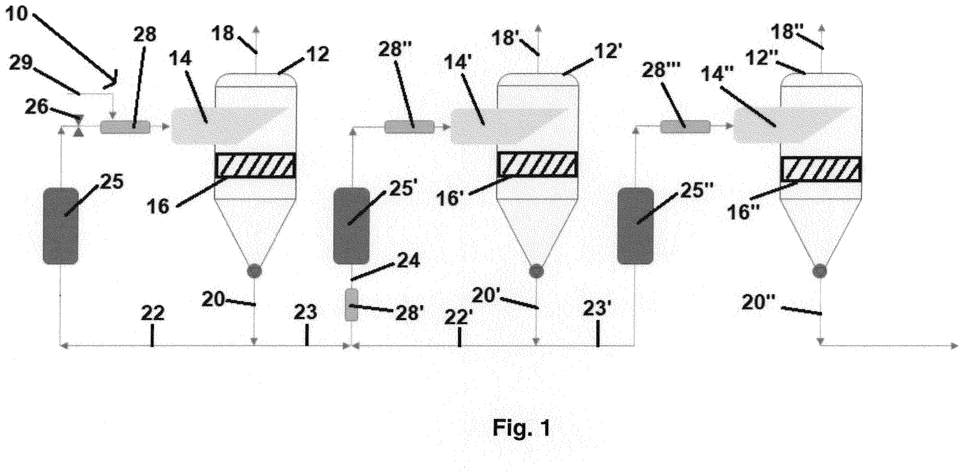

The devolatilization apparatus 10 shown in figure 1 for devolatilizing a composition comprising a volatile component, such as for devolatilizing a solid or liquid polymer composition comprising unreacted monomer, solvent and/or by-product, comprises three vessels 12, 12', 12", wherein each of the vessels 12, 12', 12" comprises a distributor 14, 14', 14" as well as an internal 16, 16', 16'", such as a perforated tray, being arranged below the respective distributor 14, 14', 14". Furthermore, each of the three vessels 12, 12', 12" comprises an outlet for gas 18, 18', 18‴ and an outlet line 20, 20', 20‴ for devolatilized composition. While the outlet line 20 for devolatilized composition of the first vessel 12 is connected with a recirculation line 22 and the outlet line 20' for devolatilized composition of the second vessel 12' is connected with a recirculation line 22', the outlet line 20" for devolatilized composition of the third vessel 12" is not connected with a recirculation line. In addition, the outlet line 20 for devolatilized composition of the first vessel 12 is connected with a connection line 23 leading into the inlet of the distributor 14' of the second vessel 12' and the outlet line 20' for devolatilized composition of the second vessel 12' is connected with a connection line 23' leading into the inlet of the distributor 14" of the third vessel 12", wherein the recirculation line 22' of the second vessel 12' leads into and combines with the connection line 23 to the combined connection and recirculation line 24 or inlet line 24 of the second vessel 12', respectively. The recirculation line 22 comprises, seen in the upstream direction, a preheater 25, a back pressure valve 26 and a static mixer 28, wherein the inlet line 29 for the composition to be devolatilized of the devolatilization apparatus 10 leads into the static mixer 28. In turn, the inlet line 24 leading to the second vessel 12' comprises, seen in the upstream direction, a static mixer 28', a preheater 25' and a static mixer 28" and the connection line 23' comprises, seen in the upstream direction, a preheater 25" and a static mixer 28'".

During the operation of the devolatilization apparatus 10, the composition comprising volatile component(s) to be devolatilized, such as a solid or liquid polymer composition comprising unreacted monomer, solvent and/or by-product, is continuously fed via the inlet line 29 for the composition to be devolatilized of the devolatilization apparatus 10 into the static mixer 28, in which it is mixed with the liquid portion being withdrawn via the outlet line 20 of the first vessel 14 and being recirculated through the recirculation line 22 and through the preheater 25 and the back pressure valve 26. The composition to be devolatilized coming from the upstream polymerization reactor is normally a two-phase stream, whereas the recirculated devolatilized stream is reheated in the preheater 25 to a homogeneous phase utilizing the back pressure valve 26, wherein this homogeneous phase converts after passing the back pressure valve 26 due to pressure drop after the back pressure valve 26 to a two-phase stream. The two streams are well mixed in the static mixer 28 under high shear, which enhances the formation of bubble nucleis and homogenizes the two streams with different solid content. The so obtained mixture then flow into the distributor 14 of the first vessel 12, where the evaporated volatiles separate from remaining liquid. The homogenized liquid falls down and is collected at the bottom of the first vessel 12. Most of the low critical temperature and low boiling point at operating pressure component of the composition to be devolatilized is evaporated in the first vessel 12 due to the operating pressure and temperature adjusted therein, wherein the flowrate of the recirculation stream and the temperature adjusted in the preheater 25 are used to control the operational temperature in the first vessel 12. The portion of the liquid stream having been devolatilized in the first vessel 12 and being withdrawn from the first vessel 12 via the outlet line 20, which is not recirculated through the recirculation line 22 into the first vessel 12, is led via the connection line 23, combined with the liquid portion being recirculation from the second vessel 12' via the recirculation line 22', led through the static mixer 28', through the preheater 25' and through the static mixer 28", before it enters the distributor 14' of the second vessel 12'. The preheating in the preheater 25' and the mixing performed in the static mixers 18', 28" allows the volatiles included in the stream to grow and form bubbles, in addition enhances the mass transfer of volatiles from the bulk liquid to the liquid surface as well as maximizes the vapor-liquid interacting surface. The evaporated volatiles separate in the second vessel 12' from the remaining liquid, wherein the flowrate of the recirculation stream and the temperature adjusted in the preheater 25' are used to control the operational temperature in the second vessel 12'. More specifically, in the second vessel 12' a polymer concentration 90% or more is achieved. Furthermore, the second static mixer 28" upstream of the distributor 14' allows to omit there a back pressure valve as it is needed in the prior art devolatilization apparatuses, which leads to a cost saving. The portion of the liquid stream having been devolatilized in the second vessel 12' and being withdrawn from the second vessel 12' via the outlet line 20', which is not recirculated through the recirculation line 22', is led via the connection line 23' through the preheater 25" and through the static mixer 28'", before it enters the distributor 14" of the third vessel 12". The preheating in the preheater 25" and the mixing performed in the static mixer 28‴ allows the volatiles included in the stream to grow and form bubbles, in addition enhances the mass transfer of volatiles from the bulk liquid to the liquid surface as well as maximizes the vapor-liquid interacting surface. In the case of a low viscosity polymer grade, the volatiles are removed in the static mixer 28‴ and reaches equilibrium status in the distributor 14" under the assistance and foaming enhancement provided by the static mixer 28'", whereas the volatiles are removed in the case of a high viscosity polymer grade from the liquid phase in the third vessel 12". Finally, pure and devolatilized polymer is withdrawn form the devolatilization apparatus 10 via the outlet line 20".

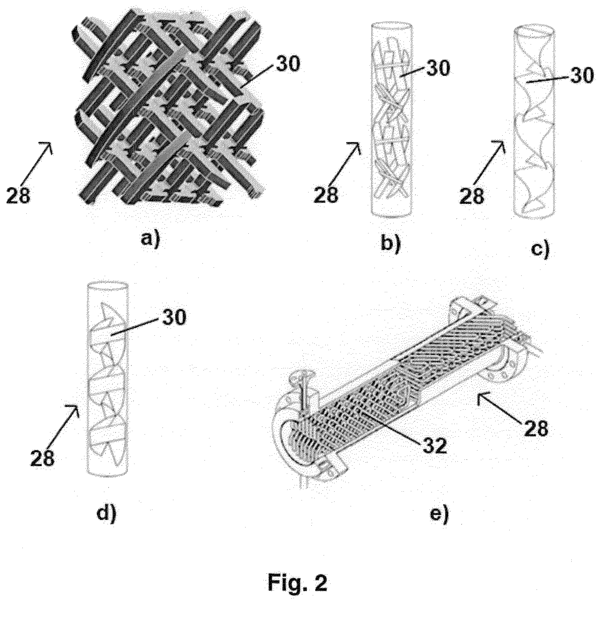

Fig. 2 shows five different types of static mixers useable in the devolatilization apparatus and in the method in accordance with the present invention, namely in Fig. 2a a static mixer 28 of the x-type comprising deflection means 30 in the form of crossbars having in a plan view as well as in a side view the x-like form. Fig. 2b shows a static mixer 28 of the baffle plate-type comprising longitudinal deflection means 30, whereas Fig. 2c and 2d show static mixers 28 with curved deflection means 30. Fig. 2e shows a combined static mixer 28 and heat transfer element comprising tube-like heat transfer elements 32 for transporting heat transfer medium within the tubes, which also functions as deflection means for liquid being transported outside of the tube-like heat transfer elements, such as it is commercially distributed by Sulzer Chemtech Ltd under the tradename SMR.

### Reference Numeral List

- 10: Devolatilization apparatus
- 12, 12', 12": Vessel
- 14, 14', 14": Distributor
- 16, 16', 16‴: Internal / perforated tray
- 18, 18', 18‴: Outlet for gas
- 20, 20', 20‴: Outlet line for devolatilized composition
- 22, 22': Recirculation line
- 23, 23': Connection line
- 24: Combined connection and recirculation line / inlet line of the second vessel
- 25, 25', 25": Preheater
- 26: Back pressure valve
- 28, 28', 28", 28‴: Static mixer
- 29: Inlet line for the composition to be devolatilized of the devolatilization apparatus
- 30: Deflection means of the static mixer
- 32: Heat transfer element of the static mixer

## Claims

1. A devolatilization apparatus for devolatilizing a composition comprising a volatile component, such as for devolatilizing a solid or liquid polymer composition comprising unreacted monomer, solvent and/or by-product, wherein the devolatilization apparatus comprises an inlet for the composition to be devolatilized and at least two vessels being arranged in series to each other, each of which comprising at least one distributor, an outlet line for devolatilized composition and an outlet for gas, wherein the distributor of the first, most upstream of the at least two vessels comprises at least one static mixer and/or is connected with at least one static mixer, wherein the inlet for the composition to be devolatilized is connected with the at least one static mixer.

2. The devolatilization apparatus in accordance with claim 1, wherein at least one distributor of the first, most upstream of the at least two vessels comprises at its upstream end an inlet and at its downstream end an outlet, wherein the at least one static mixer is arranged directly upstream of the inlet or downstream of the inlet but upstream of the outlet of the distributor.

3. The devolatilization apparatus in accordance with claim 1 or 2, wherein the outlet line for devolatilized composition of the first, most upstream of the at least two vessels is connected with a recirculation line leading into the at least one static mixer, with which the inlet for the composition to be devolatilized is connected.

4. The devolatilization apparatus in accordance with claim 3, wherein a preheater is arranged in the recirculation line upstream of the at least one static mixer, and/or wherein a back pressure valve is arranged in the recirculation line upstream of the at least one static mixer.

5. The devolatilization apparatus in accordance with any of the preceding claims, wherein the outlet line for devolatilized composition of the first, most upstream of the at least two vessels is connected with a connection line leading into the inlet of the second, next downstream of the at least two vessels.

6. The devolatilization apparatus in accordance with claim 5, wherein the outlet line for devolatilized composition of the second, next downstream vessel of the at least two vessels is connected with a recirculation line leading into the connection line.

7. The devolatilization apparatus in accordance with claim 5 or 6, wherein in the connection line a static mixer, downstream thereof a preheater and downstream thereof a back pressure valve and/or a static mixer is arranged, which is connected with the inlet of the at least one distributor of the second vessel.

8. The devolatilization apparatus in accordance with any of the preceding claims, which comprises a third, most downstream vessel comprising at least one distributor, an outlet line for devolatilized composition and an outlet for gas, wherein the outlet line for devolatilized composition of the second vessel is connected with a connection line leading into the inlet of the third, most downstream vessel, wherein preferably in the connection line a preheater and downstream thereof a back pressure valve and/or a static mixer is arranged, which is connected with the inlet of the at least one distributor of the third vessel.

9. The devolatilization apparatus in accordance with any of the preceding claims, wherein at least one and preferably all of the at least one static mixer is selected from the group consisting of x-type static mixers, spiral/helical-type static mixers, quattro-type static mixers, baffle plate-type static mixers, turbulator strips-type static mixers and any combination of two or more of the above mentioned mixer types.

10. The devolatilization apparatus in accordance with any of the preceding claims, wherein each of the at least two vessels comprises one distributor, wherein preferably each of the at least one distributor of each of the at least two vessels is a pipe or comprises an upstream portion being a pipe.

11. A plant for preparing a polymer comprising at least one polymerization reactor and connected with the outlet of at least one of the at least one polymerization reactor at least one devolatilization apparatus in accordance with any of the preceding claims.

12. A method for devolatilizing a composition comprising a volatile component, such as for devolatilizing a solid or liquid polymer composition comprising unreacted monomer, solvent and/or by-product, comprising the steps of feeding the composition to be devolatilized into the inlet for the composition to be devolatilized of the devolatilization apparatus in accordance with any of claims 1 to 10, of withdrawing gas from the outlets for gas of each of the at least two vessels and of withdrawing devolatilized composition from the outlet lines for devolatilized composition of each of the at least two vessels.

13. The method in accordance with claim 12, wherein the devolatilization apparatus comprises three vessels, wherein the first and second vessel each comprises a recirculation line leading from the outlet line for devolatilized composition back into the respective vessel.

14. The method in accordance with claim 12 or 13, wherein the ratio of the liquid being withdrawn from the outlet line for devolatilized composition of the first vessel and being recirculated via the recirculation line back into the first vessel based on the total volume of liquid being withdrawn from the outlet line for devolatilized composition from the first vessel is 0 to 90%, preferably at least 0.25 to 85% and most preferably 50 to 80%, and/or, wherein the ratio of the liquid being withdrawn from the outlet line for devolatilized composition of the second vessel and being recirculated via the recirculation line back into the second vessel based on the total volume of liquid being withdrawn from the outlet line for devolatilized composition from the second vessel is 0 to 90%, preferably at least 0.25 to 85% and most preferably 50 to 80%.

15. The method in accordance with any of claims 12 to 14, wherein the composition to be devolatilized is selected from the group consisting of polycaprolactones, polyolefin elastomers, polylactic acids, polyglycolic acids, polyolefins and mixtures or copolymers of two or more of the above mentioned polymers.
